# FASCICULE DE BREVET EUROPEEN

(11) **EP 4 346 090 B1**
(45) Date de publication et mention de la délivrance du brevet: **11.02.2026**
(21) Numéro de dépôt: 23200489.5
(22) Date de dépôt: 28.09.2023
(51) Int. Cl.: H02P 25/18, H02P 29/024, H02P 29/032, H02H 7/08, H02H 7/085

(54) **DISPOSITIF DE GESTION DE MOTEUR ET SYSTÈME DE DÉMARRAGE ET DE PROTECTION DE MOTEUR COMPRENANT UN TEL DISPOSITIF DE GESTION DE MOTEUR**
MOTORSTEUERUNGSVORRICHTUNG UND MOTORSTART- UND SCHUTZSYSTEM MIT SOLCH EINER MOTORSTEUERUNGSVORRICHTUNG
ENGINE MANAGEMENT DEVICE AND ENGINE STARTING AND PROTECTING SYSTEM INCLUDING SUCH ENGINE MANAGEMENT DEVICE

(30) Priorité: 29.09.2022 FR 2209884
(43) Date de publication de la demande: 03.04.2024
(73) Titulaire: SCHNEIDER ELECTRIC INDUSTRIES SAS, 92500 Rueil-Malmaison (FR)
(72) Inventeur: JARRIGE, Christian, 38960 SAINT AUPRE (FR); DELBAERE, Stéphane, 38240 MEYLAN (FR)
(74) Mandataire: Lavoix

(56) Documents cités:
- EP-A1- 2 293 426
- EP-A1- 3 267 462
- WO-A1-2015/022329
- GB-A- 2 565 343
- US-A1- 2022 051 864

## Description

La présente invention concerne un dispositif de gestion de moteur et un système de démarrage et de protection de moteur comprenant un tel dispositif de gestion de moteur.

US 2022/051864 A1 divulgue un dispositif avec prise « enfichable » qui se monte dans un panneau de disjoncteurs

Dans le domaine du contrôle de démarrage de moteurs électriques, il est connu d'utiliser un organe de protection, tel qu'un disjoncteur, et un organe de commutation, tel qu'un contacteur, pour protéger et gérer le démarrage d'un moteur électrique. Il est également connu d'utiliser un dispositif de gestion de moteur, connecté à l'organe de protection, à l'organe de commutation et au moteur électrique, pour piloter l'organe de commutation et surveiller le fonctionnement du moteur électrique.

Il est connu d'adapter ce type de dispositif de gestion de moteur selon chaque application, car il existe de nombreux cas d'usages différents nécessitant l'intégration de fonctions variées dans le dispositif de gestion moteur.

Par exemple, en fonction du procédé souhaité de démarrage du moteur électrique, il est connu d'utiliser plus d'un organe de commutation, par exemple deux organes de commutation permettant de choisir le sens de rotation du moteur électrique, ou bien trois organes de commutation agencés en étoile-triangle pour permettre un démarrage progressif du moteur électrique. Les sorties du dispositif de gestion de moteur doivent ainsi être adaptées en fonction du nombre d'organes de commutation à piloter.

Il est également connu d'ajouter différentes entrées-sorties au dispositif de gestion de moteur, permettant par exemple de fournir une information de défaut, de connaitre l'état de l'organe de protection, de recevoir ou de fournir des données numériques, ou encore de fournir une tension auxiliaire à des accessoires.

Ainsi, ce type de dispositif de gestion de moteur doit être adapté pour chaque cas d'usage, afin de faciliter sa mise en oeuvre au sein d'un système de démarrage et de protection de moteur. Cette adaptation présente l'inconvénient d'être onéreuse et complexe à mettre en oeuvre.

C'est à ces inconvénients qu'entend plus particulièrement remédier l'invention en proposant un dispositif de gestion de moteur simple à adapter, tout en étant économique à fabriquer.

À cet effet, l'invention concerne un dispositif de gestion de moteur, configuré pour contrôler l'alimentation électrique d'un moteur électrique en commandant au moins un organe de commutation, en fournissant une alimentation de commande à un élément de commande de chaque organe de commutation.

**Le dispositif** de gestion de moteur comprend :
- une plateforme, portant une unité électronique, l'unité électronique comportant :
   ∘ un module d'alimentation, configuré pour fournir une alimentation de commande à un élément de commande de chaque organe de commutation ;
   ∘ un module de surveillance, configuré pour mesurer le courant de chaque phase de l'alimentation électrique du moteur électrique et pour détecter un défaut du moteur électrique ;
   ∘ un module de protection, configuré pour couper l'alimentation du module d'alimentation lorsque le module de surveillance détecte un défaut électrique du moteur électrique ; et
   ∘ un module de contrôle, configuré pour commander le module d'alimentation sur la base de la mesure de courant effectuée par le module de surveillance et sur la base d'instructions de commande reçues par le dispositif de gestion de moteur, et
- un connecteur modulaire, distinct de la plateforme, comportant des éléments de connexion interchangeables, ces éléments de connexion interchangeables comportant au moins les éléments de connexion suivant:
   ∘ au moins un élément de connexion de type sortie de contrôle, le connecteur modulaire étant configuré pour comprendre autant d'éléments de connexion de type sortie de contrôle que le dispositif de gestion moteur commande d'organes de commutation, chaque élément de connexion de type sortie de contrôle étant configuré pour connecter l'élément de commande d'un organe de commutation au module d'alimentation, et
   ∘ un élément de connexion de type sortie d'état, connecté au module de surveillance et configuré pour fournir une information de défaut lorsque le module de surveillance détecte un défaut du moteur électrique.

Le module de contrôle commande en outre le module d'alimentation en fonction des éléments de connexion que comporte le connecteur modulaire.

Le connecteur modulaire comprend au moins deux emplacements de réception d'éléments de connexion, chaque emplacement étant apte à accueillir tous les types d'éléments de connexion.

Grâce à l'invention, le dispositif de gestion de moteur comprend une plateforme qui est commune à tous les cas d'usage et un connecteur modulaire permettant de facilement adapter l'interface de connexion du dispositif de gestion moteur à chaque cas d'usage, en y adjoignant les éléments de connexion nécessaires pour un cas d'usage donné.

Selon des aspects avantageux, mais non obligatoires de l'invention, le dispositif de gestion de moteur incorpore une ou plusieurs des caractéristiques suivantes, prises isolément ou selon toutes combinaisons techniquement admissibles :
- L'unité électronique comporte, en outre, un module d'identification, connecté au connecteur modulaire, le module d'identification identifiant automatiquement le nombre d'éléments de connexion que comporte le connecteur modulaire et le type de chaque élément de connexion, et le module de contrôle commande le module d'alimentation en fonction du nombre et du type des éléments de connexion que comporte le connecteur modulaire.
- Chaque élément de connexion du connecteur modulaire comprend des composants électroniques pour connecter l'élément de connexion à l'unité électronique de la plateforme et le module d'identification identifie automatiquement le type de chaque élément de connexion sur la base des composants électroniques des éléments de connexion.
- La plateforme comprend, en outre, un module de communication, configuré pour recevoir des instructions de commande provenant d'un ordinateur industriel, et pour transmettre des informations de fonctionnement du dispositif de gestion de moteur à l'ordinateur industriel, et le module de contrôle commande le module d'alimentation sur la base des instructions de commande reçues par le module de communication.
- Le dispositif de gestion moteur est configuré pour être connecté à un organe de protection du moteur électrique de sorte à disposer d'une information d'état de l'organe de protection, le module de contrôle est en outre configuré pour commander le module d'alimentation sur la base de l'information d'état de l'organe de protection, et le connecteur modulaire comprend, en outre, un élément de connexion de type entrée d'état, configuré pour connecter l'organe de protection au module de contrôle.
- Le connecteur modulaire comprend, en outre, un élément de connexion de type sortie numérique, configuré pour connecter le module de contrôle à un élément de commande numérique d'un organe de commutation, et le module de contrôle est configuré pour fournir un signal de commande numérique à l'élément de commande numérique par l'intermédiaire de l'élément de connexion de type sortie numérique.
- La plateforme comprend, en outre, un module d'alimentation auxiliaire, configuré pour être connecté à une source d'alimentation auxiliaire et pour alimenter en courant auxiliaire le dispositif de gestion de moteur, et, de préférence, le connecteur modulaire comprend en outre un élément de connexion de type sortie d'alimentation auxiliaire, configuré pour connecter le module d'alimentation auxiliaire à une charge électrique auxiliaire externe au dispositif de gestion de moteur.
- La plateforme comprend en outre un module d'arrêt d'urgence, connecté à un bouton d'arrêt d'urgence, et le module d'arrêt d'urgence coupe l'alimentation du module d'alimentation lorsque le bouton d'arrêt d'urgence est actionné.

Selon un autre aspect, l'invention concerne également un système de démarrage et de protection de moteur comprenant un organe de protection, au moins un organe de commutation, alimenté par l'organe de protection, chaque organe de commutation comportant un élément de commande configuré pour faire basculer l'organe de commutation entre un état fermé dans lequel l'organe de commutation alimente électriquement un moteur électrique, et un état ouvert dans lequel l'organe de commutation n'alimente pas électriquement le moteur électrique, et un dispositif de gestion de moteur, configuré pour fournir une alimentation de commande à l'élément de commande de chaque organe de commutation. Selon l'invention, le dispositif de gestion de moteur est tel que décrit ci-dessus.

Ce système de démarrage et de protection de moteur induit les mêmes avantages que ceux mentionnés ci-dessus au sujet du dispositif de gestion de moteur de l'invention.

L'invention sera mieux comprise et d'autres avantages de celle-ci apparaitront plus clairement à la lumière de la description qui va suivre d'un mode de réalisation d'un dispositif de gestion de moteur et d'un système de démarrage et de protection de moteur, conformes à son principe, donnée uniquement à titre d'exemple et faite en référence aux dessins annexés dans lesquels :
[Fig. 1] La figure 1 représente respectivement, sur trois inserts a) à c), trois schémas de trois modes de réalisation d'un système de démarrage et de protection de moteur conforme à l'invention ;
[Fig. 2] La figure 2 est une vue schématique du système de démarrage et de protection de moteur de l'insert a) de la figure 1 ;
[Fig. 3] La figure 3 est une vue schématique du système de démarrage et de protection de moteur de l'insert b) de la figure 1 ; et
[Fig. 4] La figure 4 est une vue schématique du système de démarrage et de protection de moteur de l'insert c) de la figure 1.

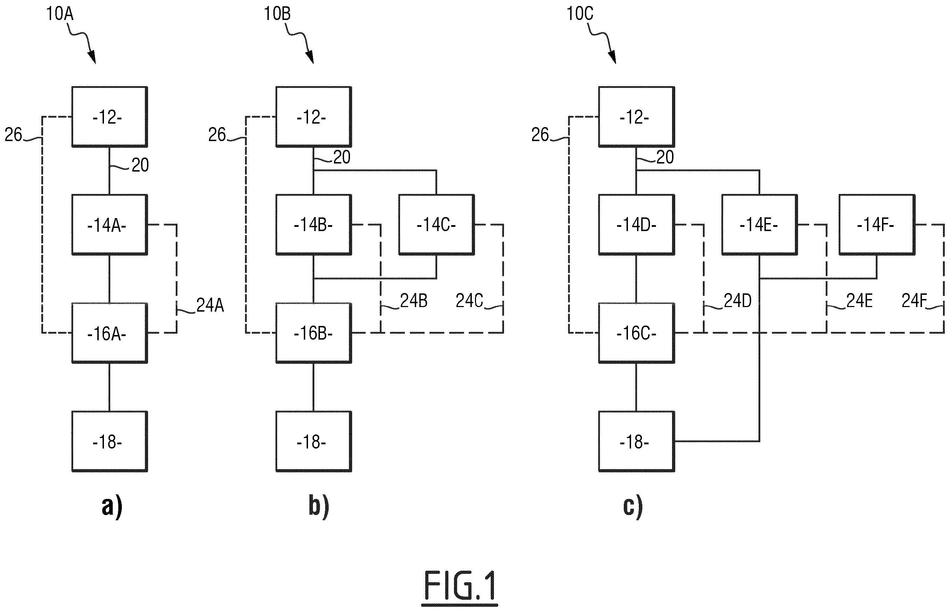

Un système de démarrage et de protection de moteur 10A conforme à un premier mode de réalisation de l'invention est visible à l'insert a) de la figure 1. Le système de démarrage et de protection de moteur 10A comprend un organe de protection 12, tel que par exemple disjoncteur, un organe de commutation 14A, tel que par exemple un contacteur, un dispositif de gestion de moteur 16A et un moteur électrique 18.

L'organe de protection 12 est raccordé à une source d'énergie électrique non-représentée. L'organe de protection 12, lorsqu'il est dans un état fermé, alimente en énergie électrique l'organe de commutation 14A, le dispositif de gestion de moteur 16A et le moteur électrique 18, cette alimentation électrique étant préférentiellement réalisée en courant triphasé. À la figure 1, des lignes de puissance 20 portant ce courant triphasé sont représentées en trait continu épais.

L'organe de protection 12 est prévu pour détecter un défaut électrique se produisant en aval, par exemple au niveau du moteur électrique 18, et pour couper l'alimentation en énergie électrique de l'organe de commutation 14A, du dispositif de gestion de moteur 16A et du moteur électrique 18 lorsqu'un défaut est détecté, c'est-à-dire pour basculer dans un état ouvert.

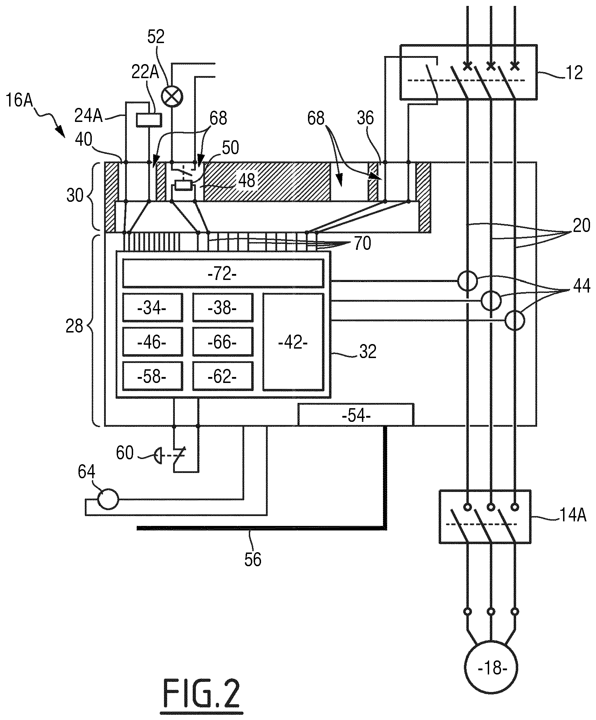

L'organe de commutation 14A permet de laisser passer ou d'interrompre l'alimentation électrique depuis l'organe de protection 12 vers le moteur électrique 18. En d'autres termes, l'organe de commutation 14A est commutable entre un état ouvert, dans lequel le moteur électrique 18 n'est pas alimenté en énergie électrique et donc à l'arrêt, et un état fermé, dans lequel le moteur électrique est alimenté en énergie électrique et donc capacité de fonctionner. L'organe de commutation 14A comprend un élément de commande 22A permettant de basculer l'organe de commutation entre ses états ouvert et fermé. En pratique, l'élément de commande 22A bascule et maintient l'organe de commutation 14A en état fermé lorsqu'il est alimenté en énergie électrique, et bascule et maintient l'organe de commutation en état ouvert lorsqu'il n'est pas alimenté en énergie électrique. En outre, l'alimentation électrique de l'élément de commande 22A est distincte de l'alimentation en énergie électrique fournie par l'organe de protection 12. L'élément de commande 22A est, par exemple, une bobine d'électro-aimant de contacteur. L'élément de commande 22A est représenté uniquement à la figure 2. Par simplification, sur la figure 2, l'élément de commande 22A est représenté distinct de l'organe de commutation 14A, bien que l'élément de commande soit en réalité intégré à l'organe de commutation.

Le dispositif de gestion de moteur 16A permet de contrôler l'élément de commande 22A de l'organe de commutation 14A. En d'autres termes, le dispositif de gestion de moteur 16A contrôle le fonctionnement du moteur électrique 18, en déterminant si le moteur électrique est alimenté ou non en énergie électrique. Ainsi, le dispositif de gestion de moteur 16A est connecté à l'organe de commutation 14A par l'intermédiaire d'une ligne électrique 24A fournissant ou non une alimentation de commande à l'élément de commande 22A de l'organe de commutation. Sur la figure 1, une ligne électrique 24A portant cette alimentation de commande est représentée par un trait interrompu long.

Le dispositif de gestion de moteur 16A est également connecté à l'organe de protection 12, de sorte à recevoir une information d'état de l'organe de protection 12. En d'autres termes, cette connexion permet au dispositif de gestion de moteur 16A de savoir si l'organe de protection 12 est en état ouvert ou fermé. Cette connexion s'effectue par une ligne de donnée 26, représentée à la figure 1 par un trait interrompu court.

En pratique, l'organe de protection 12, l'organe de commutation 14A et le dispositif de gestion de moteur 16A sont soit intégrés à un tiroir de contrôle-commande monté dans une armoire de contrôle-commande, soit intégrés à un coffret électrique ou à une armoire électrique.

Le dispositif de gestion de moteur 16A est décrit plus en détails en référence à la figure 2.

Le dispositif de gestion de moteur 16A comprend une plateforme 28 et un connecteur modulaire 30, distinct de la plateforme. Avantageusement, le connecteur modulaire 30 est fixé sur la plateforme 28. En d'autres termes, le connecteur modulaire et la plateforme sont assemblés entre eux pour former le dispositif de gestion de moteur.

La plateforme 28 porte une unité électronique 32, qui réalise les fonctions principales du dispositif de gestion de moteur 16A, et le connecteur modulaire 30 regroupe les éléments de connexion d'entrée-sortie du dispositif de gestion de moteur 16A.

L'unité électronique 32 comprend un module de contrôle 34, qui commande les opérations de la plateforme 28. Ainsi, le module de contrôle 34 détermine si le dispositif de gestion de moteur 16A fournit ou non une alimentation de commande à l'élément de commande 22A de l'organe de commutation 14A.

De préférence, le connecteur modulaire 30 comprend un élément de connexion de type entrée d'état 36, configuré pour connecter l'organe de protection 12 au module de contrôle 34. Ainsi, grâce à l'élément de connexion de type entrée d'état 36, le module de contrôle 34 récupère l'information d'état de l'organe de protection 12. En pratique, la présence de l'élément de connexion de type entrée d'état 36 est optionnelle : la connexion entre l'organe de protection 12 et le module de contrôle 34 est avantageuse, mais non-indispensable au fonctionnement du module de contrôle 34.

L'unité électronique 32 comprend un module d'alimentation 38, qui fournit une alimentation de commande à l'élément de commande 22A par l'intermédiaire de la ligne électrique 24A. En d'autres termes, l'organe de commutation 14A est dans son état fermé lorsque le module d'alimentation fournit une alimentation de commande à l'élément de commande 22A et est dans son état ouvert lorsque le module d'alimentation ne fournit pas d'alimentation de commande. En pratique, le module de contrôle 34 commande le module d'alimentation 38.

Le connecteur modulaire 30 comprend un élément de connexion de type sortie de contrôle 40. En pratique, le connecteur modulaire 30 comprend autant d'éléments de connexion de type sortie de contrôle 40 que le système de démarrage et de protection de moteur 10A comprend d'organes de commutation, c'est-à-dire un dans l'exemple du premier mode de réalisation. Chaque élément de connexion de type sortie de contrôle 40 connecte l'élément de commande 22A de l'organe de commutation 22 au module d'alimentation 38. En d'autres termes, l'alimentation de commande fournie par le module d'alimentation 38 passe par l'élément de connexion de type sortie de contrôle 40.

En variante non-représentée de l'invention, l'alimentation de commande n'est pas fournie à l'élément de commande 22A par le module d'alimentation 38, mais par un circuit électrique non-représenté, et l'élément de connexion de type sortie de contrôle 40 comprend un relais électromécanique, commandé par le module d'alimentation, qui ouvre ou ferme le circuit électrique fournissant l'alimentation de commande à l'élément de commande.

L'unité électronique 32 comprend un module de surveillance 42 qui mesure le courant de chaque phase de l'alimentation électrique du moteur électrique 18 passant par la ligne de puissance 20. Cette mesure de courant s'effectue à l'aide de capteurs de courant 44 connectés au module de surveillance 42. Sur la base de l'analyse de cette mesure de courant, le module de surveillance 42 détecte la survenue d'un défaut du moteur électrique 18, comme par exemple une surcharge.

De manière optionnelle, le module de surveillance 42 mesure également la tension de chaque phase de l'alimentation électrique du moteur électrique 18 passant par la ligne de puissance 20, à l'aide de capteurs de tension, non-représentés. Grâce à cette mesure de tension, le module de surveillance 42 calcule la puissance électrique consommée par le moteur électrique 18, ce qui est avantageux pour surveiller le fonctionnement du moteur électrique
À la figure 2, la ligne de puissance 20 est représentée traversant le dispositif de gestion de moteur 16A. En variante non-représentée de l'invention, la ligne de puissance 20 ne traverse pas le dispositif de gestion de moteur 16A et les capteurs de courant 44 sont déportés du dispositif de gestion de moteur.

L'unité électronique 32 comprend un module de protection 46, qui est configuré pour couper l'alimentation du module d'alimentation 38 lorsque le module de surveillance 42 détecte un défaut électrique du moteur électrique 18. Cette coupure de l'alimentation du module d'alimentation 38 entraîne la fin de l'émission par le module d'alimentation de l'alimentation de commande à l'élément de commande 22A, ce qui conduit l'organe de commutation 14 à basculer en état ouvert. Ainsi, lorsque le module de surveillance 42 détecte un défaut électrique du moteur électrique 18, l'alimentation du moteur électrique est coupée par le module de protection 46.

Le connecteur modulaire 30 comprend un élément de connexion de type sortie d'état 48, connecté au module de surveillance 42 et fournissant une information de défaut lorsque le module de surveillance 42 détecte un défaut du moteur électrique. Dans l'exemple, l'élément de connexion de type sortie d'état 48 comprend un relais électromécanique 50 et est connecté à un circuit électronique comprenant une source lumineuse 52, de sorte que lorsqu'un défaut du moteur électrique est détecté par le module de surveillance 42, une commande est envoyée par le module de contrôle 34 entraînant l'activation du relais électromécanique 50 et l'allumage de la source lumineuse 52. Ici, l'information de défaut est ainsi un signal de commande au relais électromécanique 50 qui entraîne l'émission d'une information lumineuse. En variante non-représentée de l'invention, l'élément de connexion de type sortie d'état 48 fournit un autre type d'information de défaut, comme un signal sonore, un signal de commande, ou un message informatique.

Le module de surveillance 42 entraîne donc, de préférence, la coupure de l'alimentation du module d'alimentation 38 par le module de protection 46, et l'émission d'une information de défaut par l'élément de connexion de type sortie d'état 48. L'émission d'une information de défaut peut s'effectuer préalablement à la coupure de l'alimentation du module d'alimentation, par exemple lorsque le défaut détecté n'est pas suffisamment important pour justifier cette coupure, ou bien simultanément à la coupure de l'alimentation, ou bien à la suite de la coupure d'alimentation.

De préférence, la plateforme 28 du dispositif de gestion de moteur 16A comprend un module de communication 54, qui reçoit des instructions de commande provenant d'un ordinateur industriel, non représenté, et fournit ces informations au module de contrôle 34. De préférence, le module de communication 54 transmet, en outre, des informations de fonctionnement du dispositif de gestion de moteur 16A à l'ordinateur industriel. Avantageusement, le module de contrôle 34 commande le module d'alimentation 38 sur la base des instructions de commande reçues par le module de communication 54.

Sur la figure 2, le module de communication 54 est représenté distinct de l'unité électronique 32. En variante non-représentée de l'invention, ce module de communication est intégré à l'unité électronique 32.

Dans l'exemple, le module de communication 54 échange avec l'ordinateur industriel par l'intermédiaire d'un bus de données 56. En variante non-représentée de l'invention, cet échange s'effectue par d'autres moyens, comme par exemple à l'aide d'une liaison analogique ou bien à l'aide d'une liaison sans fil, telle qu'une liaison radio ou Wi-Fi.

De préférence, l'unité électronique 32 comprend un module d'arrêt d'urgence 58, connecté à un bouton d'arrêt d'urgence 60. Dans l'exemple, le bouton d'arrêt d'urgence 60 est déporté du dispositif de gestion de moteur 16A. Par exemple, le bouton d'arrêt d'urgence est situé à proximité du moteur électrique 18. En variante non-représentée de l'invention, le bouton d'arrêt d'urgence 60 est fixé à la plateforme 28. Lorsque le bouton d'arrêt d'urgence 60 est actionné par un utilisateur, le module d'arrêt d'urgence 58 interrompt l'alimentation du module d'alimentation 38, et donc de la sortie de contrôle 40, ce qui entraîne le basculement en état ouvert de l'organe de commutation 14A, et donc l'arrêt du moteur électrique 18.

De préférence, l'unité électronique 32 comprend un module d'alimentation auxiliaire 62, qui est alimenté en courant auxiliaire par une source d'alimentation auxiliaire 64, externe au dispositif de gestion de moteur 16A. Par souci de simplification, la liaison physique entre le module d'alimentation auxiliaire 62 et la source d'alimentation auxiliaire 64 n'est pas représentée à l'intérieur de la plateforme 28 à la figure 2. Le module d'alimentation auxiliaire 62 alimente le dispositif de gestion de moteur 16A en courant auxiliaire, ce qui constitue une alimentation de fonctionnement du dispositif de gestion de moteur 16A. Ainsi, grâce au module d'alimentation auxiliaire 62 et à la source d'alimentation auxiliaire 64, le dispositif de gestion de moteur 16A est en permanence alimenté en énergie électrique, y compris lorsque l'organe de protection 12 est en état ouvert et n'alimente pas en énergie électrique le dispositif de gestion de moteur 16A. Le fonctionnement du dispositif de gestion de moteur 16A est donc assuré en permanence.

De préférence, le connecteur modulaire 30 comprend un élément de connexion de type sortie d'alimentation auxiliaire, non-représenté, qui est connecté au module d'alimentation auxiliaire 62. L'élément de connexion de type sortie d'alimentation auxiliaire est prévu pour être raccordé à une charge électrique auxiliaire et pour alimenter cette charge électrique auxiliaire avec le courant auxiliaire, la charge électrique auxiliaire étant externe au dispositif de gestion de moteur 16A. L'élément de connexion de type sortie d'alimentation auxiliaire se présente par exemple sous la forme d'une prise électrique prévue pour accueillir une fiche électrique mâle. Ainsi, grâce à l'élément de connexion de type sortie d'alimentation auxiliaire, il est possible d'alimenter une charge électrique auxiliaire y compris lorsque l'organe de protection 12 est en état ouvert. Une telle charge électrique auxiliaire est par exemple un capteur nécessitant une alimentation électrique permanente.

De préférence, le connecteur modulaire 30 comprend un élément de connexion de type entrée numérique, non-représenté, qui est connecté au module de communication 54 par l'intermédiaire de l'unité électronique 32 ou qui est directement connecté au module de contrôle 34. L'élément de connexion de type entrée numérique est connecté avec un système de communication numérique, tel que par exemple un bus informatique. Cette connexion s'effectue par exemple par l'intermédiaire du protocole Ethernet. L'élément de connexion de type entrée numérique est avantageux pour permettre à la plateforme 28 de recevoir des données numériques provenant d'un appareil extérieur au dispositif de gestion de moteur 16A, sans nécessiter l'utilisation du bus de données 56, ou en parallèle de l'utilisation du bus de données 56. Par exemple, l'élément de connexion de type entrée numérique est prévu pour recevoir des données numériques en provenance du moteur électrique 18, ces données étant ensuite utilisées par le module de contrôle 34 et/ou transmises à l'ordinateur industriel par le module de communication 54.

En variante non-représentée de l'invention, l'élément de commande 22A de l'organe de commutation 14A est un élément de commande de type numérique, qui ne bascule pas l'organe de commutation entre ses états ouvert et fermé sur la base d'une alimentation de commande, mais sur la base d'un signal de commande numérique. Dans une telle variante, le connecteur modulaire 30 comprend un élément de connexion de type sortie numérique, non-représenté, qui est connecté d'une part au module de contrôle 34 et d'autre part à l'élément de commande 22A. Ainsi, le module de contrôle 34 fournit un signal de commande numérique à l'élément de commande 22A par l'intermédiaire de l'élément de connexion de type sortie numérique. De préférence, dans une telle variante, l'unité électronique 32 comprend un module de commande numérique, connecté d'une part au module de contrôle 34 et d'autre part à l'élément de connexion de type sortie numérique. Ce module de commande numérique émet le signal de commande numérique fourni à l'élément de commande 22A par l'intermédiaire de l'élément de connexion de type numérique, l'émission de ce signal de commande numérique étant commandée par le module de contrôle 34.

De préférence, l'unité électronique 32 comprend un module de diagnostic 66 qui est connecté au module de contrôle 34, au module d'alimentation 38 et au module de surveillance 42. Le module de diagnostic 66 analyse l'alimentation de commande fournie par le module de contrôle 34 à l'élément de connexion de type sortie de contrôle 40, ainsi que les mesures de courant effectuées par les capteurs 44 pour analyser l'état de santé de l'organe de commutation 14A et de son élément de commande 22A. Par exemple, si le courant traversant la ligne de puissance 20 est important, alors l'organe de commutation 14A est sollicité thermiquement, ce qui diminue sa durée de vie. L'analyse du courant circulant dans l'élément de commande 22A fournit également des informations sur l'état de santé de l'organe de commutation 14A. L'analyse de l'état de santé de l'organe de commutation 14A effectuée par le module de diagnostic 66 est fournie au module de contrôle 34, de sorte que le fonctionnement du dispositif de gestion moteur 16A peut être adapté, notamment lorsqu'une défaillance de l'organe de commutation 14A est détectée ou anticipée.

**Avantageusement,** le connecteur modulaire 30 comprend plusieurs emplacements de réception d'éléments de connexion 68, dans l'exemple quatre emplacements de réception d'éléments de connexion 68. Parmi ces quatre emplacements, un premier reçoit l'élément de connexion de type sortie de contrôle 40, un deuxième reçoit l'élément de connexion de type sortie d'état 48, un troisième n'est pas utilisé et un quatrième reçoit l'élément de connexion de type entrée d'état 36. Le connecteur modulaire 30 est dit modulaire car chaque emplacement de réception d'éléments de connexion 68 est apte à accueillir tous les types d'éléments de connexion, à savoir un élément de connexion de type entrée d'état 36, un élément de connexion de type sortie de contrôle 40, un élément de connexion de type sortie d'état 48, un élément de connexion de type sortie d'alimentation auxiliaire, un élément de connexion de type entrée numérique ou un élément de connexion de type sortie numérique.

Les éléments de connexion sont donc interchangeables au sein des emplacements de réception d'éléments de connexion 68.

En variante non-représentée de l'invention, le connecteur modulaire comprend un nombre d'emplacements de réception d'éléments de connexion 68 différent de quatre, par exemple six ou huit emplacements.

Chaque emplacement de réception d'éléments de connexion 68 est connecté à la plateforme 28, et plus précisément à l'unité électronique 32, par un ensemble de connecteurs électriques 70, qui sont représentés de manière schématique à la figure 2. Les connecteurs électriques 70 sont par exemple des broches, également désignées sous l'appellation de *« pins ».* La connexion d'un élément de connexion avec l'unité électronique 32 s'effectue par l'intermédiaire des connecteurs électriques 70.

En pratique, un grand nombre de connecteurs électriques 70 débouche dans chaque emplacement de réception d'éléments de connexion 68, par exemple entre 10 et 30 connecteurs électriques 70, de préférence 20 connecteurs électriques, et un élément de connexion d'un type donné n'utilise qu'une partie de ces connecteurs électriques 70 pour être connecté à l'unité électronique 32, par exemple deux ou trois connecteurs électriques, les connecteurs électriques utilisés dépendant du type de l'élément de connexion. Ainsi, à partir des connecteurs électriques 70 utilisés pour connecteur un élément de connexion à l'unité électronique 32, il est possible d'identifier le type de l'élément de connexion.

À titre d'exemple, l'élément de connexion de type sortie de contrôle 40 est connecté à des connecteurs électriques 70 directement reliés au module d'alimentation 38, de sorte que ces connecteurs électriques 70 fournissent l'alimentation de commande à l'élément de connexion de type sortie de contrôle 40.

Pour identifier le type de chaque élément de connexion et le nombre d'éléments de connexion du connecteur modulaire 30, l'unité électronique 32 comprend un module d'identification 72 qui est interposé entre les autres modules de l'unité électronique 32 et les connecteurs électriques 70. En d'autres termes, tous les connecteurs électriques 70 sont connectés au module d'identification 72. Ainsi, le module d'identification 72 est connecté au connecteur modulaire 30. Le module d'identification 72 identifie automatiquement le nombre d'éléments de connexion que comporte le connecteur modulaire 30 ainsi que type de chaque élément de connexion, et partage ces informations avec le module de contrôle 34.

Ainsi, le module de contrôle 34 commande les modules de l'unité électronique 32 sur la base du nombre et du type des éléments de connexion que comporte le connecteur modulaire 30. Par exemple, le module de contrôle 34 contrôle le module d'alimentation 38 sur la base de la mesure de courant effectuée par le module de surveillance 42, sur la base de l'information d'état du dispositif de protection 12, sur la base d'instructions de commande reçues par le dispositif de gestion de moteur 16A et sur la base du nombre d'éléments de connexion de type sortie de contrôle 40 que comprend le connecteur modulaire 30.

En pratique, chaque élément de connexion comprend des composants électroniques pour connecter l'élément de connexion aux connecteurs électriques 70, donc à la plateforme 32. Les composants électroniques que comprend un élément de connexion dépend du type de l'élément de connexion, de sorte qu'un élément de connexion d'un type donné est connecté, par ces composants électroniques, à des connecteurs électriques 70 spécifiques. Ces composants électroniques sont, par exemple, des fiches dans lesquelles connecteurs électriques 70 viennent s'enficher. Ainsi, le module d'identification 72 est en mesure d'identifier le type d'un élément de connexion sur la base des composants électroniques que comporte cet élément de connexion. Le module d'identification 72 est soit formé à l'aide d'un élément physique de l'unité électronique 32, par exemple à l'aide d'un microcontrôleur connecté aux connecteurs électriques 70, soit formé de manière virtuelle, c'est-à-dire que la fonction d'identification du module d'identification 72 est obtenue à l'aide d'une fonction exécutée par le module de contrôle 34.

En d'autres termes, le module d'identification 72, et donc le dispositif de gestion de moteur 16A, est en mesure de connaître le nombre et le type des éléments de connexion que comporte le connecteur modulaire 30 simplement en connectant le connecteur modulaire à la plateforme 28. Avantageusement, le fonctionnement du dispositif de gestion de moteur 16A est ainsi adapté, ou personnalisé, en fonction du nombre et du type des éléments de connexion du connecteur modulaire 30, sans nécessiter de configuration supplémentaire du dispositif de gestion moteur.

Par exemple, s'il est détecté qu'un élément de connexion de type sortie d'état 48 est présent dans le connecteur modulaire 30, alors le module de contrôle 34 indique au module de surveillance 42 de fournir une information de défaut à l'élément de connexion de type sortie d'état en cas de défaut électrique du moteur électrique 18.

Selon un autre exemple, s'il est détecté qu'un élément de connexion de type entrée numérique est présent dans le connecteur modulaire 30, alors le module de communication 54 surveille l'arrivée de données numériques par l'intermédiaire de l'élément de connexion de type entrée numérique, afin de transmettre ces données à l'ordinateur industriel et/ou au module de contrôle 34 pour que le module de contrôle adapte le fonctionnement du dispositif de gestion de moteur 16A en fonction de ces données.

En variante non-représentée de l'invention, l'unité électronique 32 ne comprend pas de module d'identification 72 et chaque élément de connexion embarque un composant électronique d'identification indiquant au module de contrôle 34 le type de l'élément de connexion. En d'autres termes, dans une telle variante, le module de contrôle 34 identifie le nombre et le type des éléments de connexion que comporte le connecteur modulaire 30 sur la base des informations d'identification fournies par chacun des éléments de connexion.

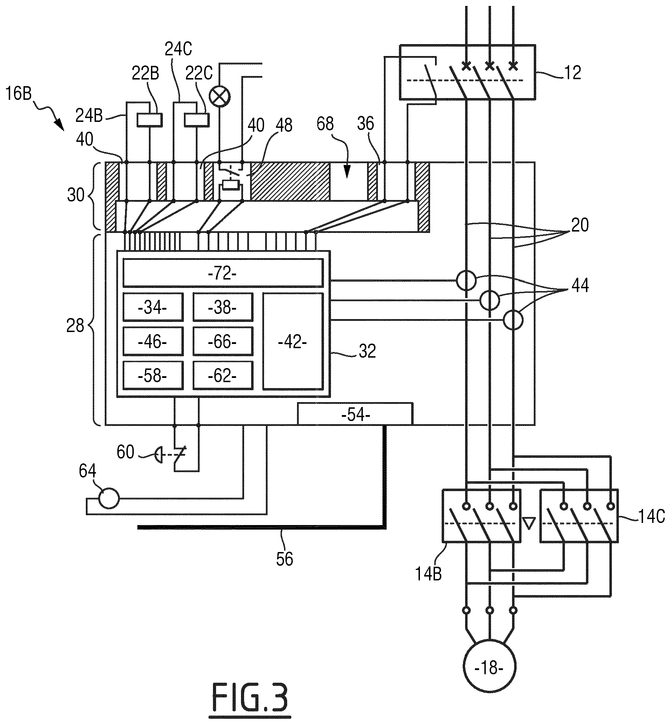

Un système de démarrage et de protection de moteur 10B conforme à un deuxième mode de réalisation de l'invention est visible à l'insert b) de la figure 1. Le système de démarrage et de protection de moteur 10B comprend un organe de protection 12, identique à celui du premier mode de réalisation, deux organes de commutation 14B et 14C, un dispositif de gestion de moteur 16B, mieux visible à la figure 3, et un moteur électrique 18, identique à celui du premier mode de réalisation.

Dans le deuxième mode de réalisation, les éléments analogues à ceux du premier mode de réalisation portent les mêmes références et fonctionnent de la même façon. Dans ce qui suit, on décrit principalement les différences entre les premier et deuxième modes de réalisation.

En outre, si un composant est mentionné dans la description du deuxième mode de réalisation sans être représenté sur la figure 3, il correspond au même élément représenté sur la figure 2 pour le premier mode de réalisation.

Les organes de commutation 14B et 14C fonctionnent comme l'organe de commutation 14A du premier mode de réalisation, c'est-à-dire que chacun permet de laisser passer ou d'interrompre l'alimentation électrique depuis l'organe de protection 12 vers le moteur électrique 18 et comprend un élément de commande, notés respectivement 22B et 22C.

**L'organe** de protection 12 alimente en énergie électrique les deux organes de commutation 14B et 14C, le dispositif de gestion de moteur 16B et le moteur électrique 18.

Le fonctionnement du système de démarrage et de protection de moteur 10B diffère de celui du premier mode de réalisation en ce que le dispositif de gestion de moteur 16B, qui contrôle les éléments de commande 22B et 22C, détermine par l'intermédiaire de quel organe de commutation 14B ou 14C le moteur électrique 18 est alimenté. En d'autres termes, le dispositif de gestion de moteur 16B choisit soit d'ouvrir l'organe de commutation 14C et de fermer l'organe de commutation 14B, pour alimenter le moteur électrique 18 par l'intermédiaire de l'organe de commutation 14B, soit d'ouvrir l'organe de commutation 14B et de fermer l'organe de commutation 14C, pour alimenter le moteur électrique 18 par l'intermédiaire de l'organe de commutation 14C, soit d'ouvrir les organes de commutation 14A et 14C, pour que le moteur électrique ne soit pas alimenté.

En outre, la ligne de puissance 20 est agencée en parallèle au travers des organes de commutation 14B et 14C, de telle sorte que le sens de rotation du moteur électrique 18 soit différent selon l'organe de commutation alimentant le moteur électrique. Ainsi, lorsque l'organe de commutation 14B est fermé, le moteur électrique tourne dans un premier sens, et lorsque l'organe de commutation 14C est fermé, le moteur électrique tourne dans un deuxième sens, opposé au premier sens. Le branchement du moteur électrique 18 est ainsi réalisé en mode dit *« inverseur ».*

On comprend alors que dans le deuxième mode de réalisation, le dispositif de gestion de moteur 16B contrôle deux éléments de commande 22B, 22C et donc que le connecteur modulaire 30 comprend deux éléments de connexion de type sortie de contrôle 40, parmi lesquels un premier est connecté d'une part au module d'alimentation 38 et d'autre part à l'élément de commande 22B de l'organe de commutation 14B, par l'intermédiaire d'une ligne électrique 24B, et un second est connecté d'une part au module d'alimentation 38 et d'autre part à l'élément de commande 22C l'organe de commutation 14C, par l'intermédiaire d'une ligne électrique 24C. En d'autres termes, le connecteur modulaire 30 comprend autant éléments de connexion de type sortie de contrôle 40 que le système de démarrage et de protection de moteur comprend d'organes de commutation.

Ainsi, le dispositif de gestion de moteur 16B du deuxième mode de réalisation diffère du dispositif de gestion de moteur 16A du premier mode de réalisation uniquement par les éléments de connexion que comprend le connecteur modulaire 30. En d'autres termes, la plateforme 28 du dispositif de gestion de moteur 16B est identique à la plateforme 28 du dispositif de gestion de moteur 16A.

En variante, dans le deuxième mode de réalisation, le moteur électrique 18 tourne dans le même sens quel que soit l'organe de commutation 14B, 14C fermé, mais tourne à une vitesse différente en fonction de l'organe de commutation fermé.

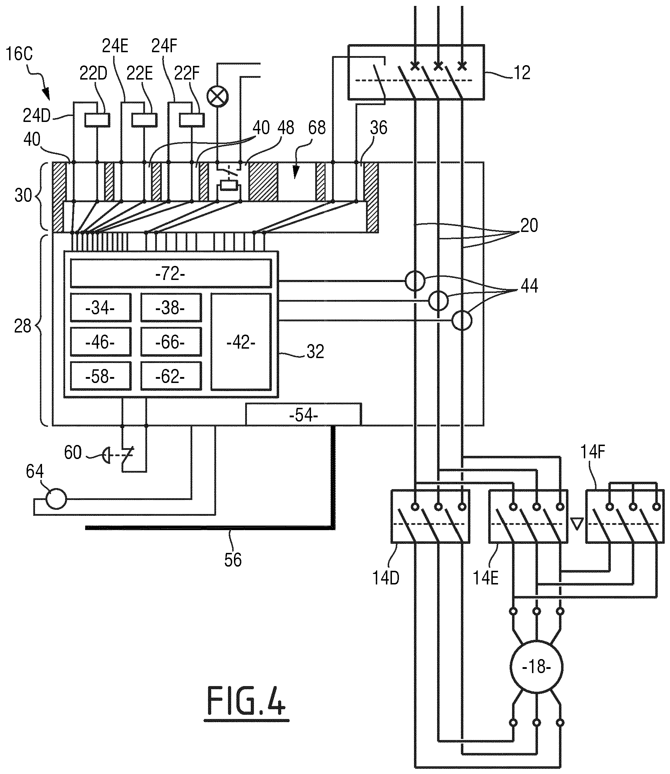

Un système de démarrage et de protection de moteur 10C conforme à un troisième mode de réalisation de l'invention est visible à l'insert c) de la figure 1. Le système de démarrage et de protection de moteur 10C comprend un organe de protection 12, identique à celui du premier mode de réalisation, trois organes de commutation 14D, 14E et 14F, un dispositif de gestion de moteur 16C, mieux visible à la figure 4, et un moteur électrique 18, identique à celui du premier mode de réalisation.

Dans le troisième mode de réalisation, les éléments analogues à ceux des premier et deuxième modes de réalisation portent les mêmes références et fonctionnent de la même façon. Dans ce qui suit, on décrit principalement les différences entre le troisième mode de réalisation et les modes de réalisation précédents.

En outre, si un composant est mentionné dans la description du troisième mode de réalisation sans être représenté sur la figure 4, il correspond au même élément représenté sur les figures 2 et 3 pour le premier et le deuxième mode de réalisation.

L'organe de protection 12 alimente en énergie électrique les trois organes de commutation 14D, 14E et 14F, le dispositif de gestion de moteur 16B et le moteur électrique 18.

La ligne d'alimentation 20 et les organes de commutation 14D, 14E et 14F sont connectés à l'organe de protection 12 et au moteur électrique 18 selon une disposition dite *« étoile-triangle »,* connue en soi. Dans cette disposition, le moteur électrique 18 est alimenté soit dans une première configuration dans laquelle l'organe de commutation 14D et l'organe de commutation 14E sont à l'état fermé, l'organe de commutation 14F étant alors à l'état ouvert, soit dans une deuxième configuration dans laquelle l'organe de commutation 14D et l'organe de commutation 14F sont à l'état fermé, l'organe de commutation 14E étant alors à l'état ouvert. Les organes de commutation 14D, 14E et 14F sont connectés entre eux et au moteur électrique 18, de sorte que la tension d'alimentation du moteur électrique soit différente dans la première configuration et dans la deuxième configuration.

Les organes de commutation 14D, 14E et 14F comprennent chacun un élément de commande, notés respectivement 22D, 22E et 22F.

Le fonctionnement du système de démarrage et de protection de moteur 10C diffère de celui du premier mode de réalisation en ce que le dispositif de gestion de moteur 16C, qui contrôle les éléments de commande 22D, 22E et 22F, détermine selon quel dispositif des organes de commutation le moteur électrique 18 est alimenté. En d'autres termes, le dispositif de gestion de moteur 16C choisit soit d'ouvrir l'organe de commutation 14F et de fermer les organes de commutation 14D et 14E, soit d'ouvrir l'organe de commutation 14E et de fermer les organes de commutation 14D et 14F, soit d'ouvrir les trois organes de commutation 14D, 14E et 14F, pour que le moteur électrique ne soit pas alimenté.

On comprend alors que dans le troisième mode de réalisation, le dispositif de gestion de moteur 16C contrôle trois éléments de commande 22D, 22E et 22F et donc que le connecteur modulaire 30 comprend trois éléments de connexion de type sortie de contrôle 40, parmi lesquels un premier est connecté d'une part au module d'alimentation 38 et d'autre part à l'élément de commande 22D de l'organe de commutation 14D, par l'intermédiaire d'une ligne électrique 24D, un deuxième est connecté d'une part au module d'alimentation 38 et d'autre part à l'élément de commande 22E de l'organe de commutation 14E, par l'intermédiaire d'une ligne électrique 24E et un troisième est connecté d'une part au module d'alimentation 38 et d'autre part à l'élément de commande 22F l'organe de commutation 14F, par l'intermédiaire d'une ligne électrique 24F.

Ainsi, le dispositif de gestion de moteur 16C du troisième mode de réalisation diffère des dispositifs de gestion de moteur 16A et 16B des premier et deuxième modes de réalisation uniquement par les éléments de connexion que comprend le connecteur modulaire 30. En d'autres termes, la plateforme 28 du dispositif de gestion de moteur 16C est identique à la plateforme 28 des dispositifs de gestion de moteur 16A et 16B.

On comprend de la description des trois modes de réalisation du dispositif de gestion de moteur 16A, 16B et 16C que le fonctionnement du module d'alimentation 38 dépend du nombre d'éléments de connexion de type sortie de contrôle 40 présents dans le connecteur modulaire 30, puisque ce nombre d'éléments de connexion dépend du nombre d'organes de commutation devant être commandés par le dispositif de gestion de moteur. Il est avantageux que le nombre d'éléments de connexion de type sortie de contrôle 40 soit automatiquement détecté par l'unité électronique 32, sans nécessiter d'intervention d'un utilisateur, car le fonctionnement du dispositif de gestion de moteur 16A, 16B, 16C est ainsi automatiquement adapté au système de démarrage et de protection de moteur 10A, 10B, 10C dans lequel il est intégré.

De manière générale, il est possible d'obtenir un dispositif de gestion de moteur adapté à chaque application en utilisant la plateforme 28 telle que décrite ci-dessus et un connecteur modulaire 30 comprenant toute configuration souhaitable d'éléments de connexion parmi ceux de type entrée d'état 36, sortie de contrôle 40, sortie d'état 48, sortie d'alimentation auxiliaire, entrée numérique et sortie numérique. En d'autres termes, quelle que soit la configuration d'un système de démarrage et de protection de moteur donné, le dispositif de gestion de moteur de ce système est adapté simplement en choisissant les éléments de connexion du connecteur modulaire, et en utilisant une plateforme 28 identique, le fonctionnement du dispositif de gestion de moteur est adapté en fonction des éléments de connexion présent, notamment grâce au module d'identification 72. En d'autres termes, la topologie de départ moteur requise pour un système de démarrage et de protection de moteur donné est automatiquement détectée en fonction des éléments de connexion du connecteur modulaire 30. Ainsi, il est particulièrement simple d'adapter le dispositif de gestion de moteur à chaque cas d'usage, sans nécessiter d'intervention d'un utilisateur ni de configuration manuelle de la plateforme 28.

En outre, le fait que la plateforme 28 soit identique quel que soit le cas d'usage du dispositif de gestion de moteur est particulièrement avantageux en permettant une réduction du coût de fabrication de la plateforme, grâce à une fabrication en série.

Il est également particulièrement avantageux que le dispositif de gestion de moteur 16A, 16B, 16C comprenne une plateforme 28 et un connecteur modulaire 30 distinct de la plateforme, car en cas de panne de la plateforme 28, il est aisé de remplacer la plateforme défaillante par une autre plateforme identique et de connecter le connecteur modulaire sur la nouvelle plateforme. Le remplacement d'une plateforme défaillante est ainsi particulièrement simple. En effet, comme le connecteur modulaire d'origine 30 est conservé et comme l'ensemble des branchements aux éléments de connexion s'effectue sur le connecteur modulaire 30, ce remplacement nécessite très peu d'opérations de câblage. En pratique, ce remplacement nécessite seulement le branchement des capteurs de courant 44 sur la ligne de puissance 20 et éventuellement du bouton d'arrêt d'urgence 60 et du générateur de tension 64, mais ne requiert aucun câblage relatif au contrôle des organes de commutation, puisque ce câblage est réalisé au niveau du connecteur modulaire 30 pouvant être réutilisé.

En résumé, pour permettre une mise en œuvre aisée d'un dispositif de gestion de moteur au sein d'un système de démarrage et de protection de moteur, il est proposé une plateforme 28 commune à tous les cas d'usage et une gamme d'éléments de connexion des différents types décrits ci-dessus. En outre, d'autres types d'éléments de connexion, non-décrits ici, sont utilisables dans le connecteur modulaire 30, selon les besoins spécifiques à chaque système de démarrage et de protection de moteur.

Toute caractéristique décrite pour un mode de réalisation ou une variante dans ce qui précède peut être mise en œuvre pour les autres modes de réalisation et variantes décrits précédemment, pour autant que techniquement faisable.

## Revendications

1. **Dispositif** de gestion de moteur (16A ; 16B ; 16C), configuré pour contrôler l'alimentation électrique d'un moteur électrique (18) en commandant au moins un organe de commutation (14A ; 14B, 14C ; 14D, 14E, 14F), en fournissant une alimentation de commande à un élément de commande (22A ; 22B, 22C ; 22D, 22E, 22F) de chaque organe de commutation, le dispositif de gestion de moteur (16A ; 16B ; 16C) comprenant :
- une plateforme (28), portant une unité électronique (32), l'unité électronique comportant :
∘ un module d'alimentation (38), configuré pour fournir une alimentation de commande à un élément de commande (22A ; 22B, 22C ; 22D, 22E, 22F) de chaque organe de commutation (14A ; 14B, 14C ; 14D, 14E, 14F) ;
∘ un module de surveillance (42), configuré pour mesurer le courant de chaque phase de l'alimentation électrique du moteur électrique (18) et pour détecter un défaut du moteur électrique ;
∘ un module de protection (46), configuré pour couper l'alimentation du module d'alimentation (38) lorsque le module de surveillance détecte un défaut électrique du moteur électrique (18) ; et
∘ un module de contrôle (34), configuré pour commander le module d'alimentation (38) sur la base de la mesure de courant effectuée par le module de surveillance (42) et sur la base d'instructions de commande reçues par le dispositif de gestion de moteur (16A ; 16B ; 16C), et
- un connecteur modulaire (30), distinct de la plateforme (28), comportant des éléments de connexion interchangeables, ces éléments de connexion interchangeables comportant au moins les éléments de connexion suivant:
∘ au moins un élément de connexion de type sortie de contrôle (40), le connecteur modulaire étant configuré pour comprendre autant d'éléments de connexion de type sortie de contrôle que le dispositif de gestion moteur commande d'organes de commutation (14A ; 14B, 14C ; 14D, 14E, 14F), chaque élément de connexion de type sortie de contrôle étant configuré pour connecter l'élément de commande d'un organe de commutation au module d'alimentation, et
∘ un élément de connexion de type sortie d'état (48), connecté au module de surveillance (42) et configuré pour fournir une information de défaut lorsque le module de surveillance détecte un défaut du moteur électrique (18), dans lequel le module de contrôle (34) commande en outre le module d'alimentation (38) en fonction des éléments de connexion que comporte le connecteur modulaire (30),
et dans lequel le connecteur modulaire (30) comprend au moins deux emplacements de réception d'éléments de connexion (68), chaque emplacement étant apte à accueillir tous les types d'éléments de connexion (36, 40).

2. Dispositif de gestion de moteur (16A ; 16B ; 16C) selon la revendication 1, dans lequel l'unité électronique (32) comporte, en outre, un module d'identification (72), connecté au connecteur modulaire (30), le module d'identification identifiant automatiquement le nombre d'éléments de connexion (36, 40) que comporte le connecteur modulaire et le type de chaque élément de connexion, et dans lequel le module de contrôle (34) commande le module d'alimentation (38) en fonction du nombre et du type des éléments de connexion que comporte le connecteur modulaire.

3. Dispositif de gestion de moteur (16A ; 16B ; 16C) selon la revendication 2, dans lequel chaque élément de connexion (36, 40) du connecteur modulaire (30) comprend des composants électroniques pour connecter l'élément de connexion à l'unité électronique (32) de la plateforme (28) et dans lequel le module d'identification (72) identifie automatiquement le type de chaque élément de connexion sur la base des composants électroniques des éléments de connexion.

4. Dispositif de gestion de moteur (16A ; 16B ; 16C) selon l'une quelconque des revendications 1 à 3, dans lequel la plateforme (28) comprend, en outre, un module de communication (54), configuré pour recevoir des instructions de commande provenant d'un ordinateur industriel, et pour transmettre des informations de fonctionnement du dispositif de gestion de moteur (16A ; 16B ; 16C) à l'ordinateur industriel, et dans lequel le module de contrôle (34) commande le module d'alimentation (38) sur la base des instructions de commande reçues par le module de communication.

5. Dispositif de gestion de moteur (16A ; 16B ; 16C) selon l'une quelconque des revendications 1 à 4, dans lequel le dispositif de gestion moteur (16A ; 16B ; 16C) est configuré pour être connecté à un organe de protection (12) du moteur électrique (18) de sorte à disposer d'une information d'état de l'organe de protection, dans lequel le module de contrôle (34) est en outre configuré pour commander le module d'alimentation (38) sur la base de l'information d'état de l'organe de protection (12), et dans lequel le connecteur modulaire (30) comprend, en outre, un élément de connexion de type entrée d'état (36), configuré pour connecter l'organe de protection au module de contrôle.

6. Dispositif de gestion de moteur (16A ; 16B ; 16C) selon l'une quelconque des revendications 1 à 5, dans lequel le connecteur modulaire (30) comprend, en outre, un élément de connexion de type sortie numérique, configuré pour connecter le module de contrôle (34) à un élément de commande numérique d'un organe de commutation, et dans lequel le module de contrôle est configuré pour fournir un signal de commande numérique à l'élément de commande numérique par l'intermédiaire de l'élément de connexion de type sortie numérique.

7. Dispositif de gestion de moteur (16A ; 16B ; 16C) selon l'une quelconque des revendications 1 à 6, dans lequel la plateforme (28) comprend, en outre, un module d'alimentation auxiliaire (62), configuré pour être connecté à une source d'alimentation auxiliaire (64) et pour alimenter en courant auxiliaire le dispositif de gestion de moteur (16A ; 16B ; 16C), et dans lequel, de préférence, le connecteur modulaire (30) comprend en outre un élément de connexion de type sortie d'alimentation auxiliaire, configuré pour connecter le module d'alimentation auxiliaire (62) à une charge électrique auxiliaire externe au dispositif de gestion de moteur.

8. Dispositif de gestion de moteur (16A ; 16B ; 16C) selon l'une quelconque des revendications 1 à 6, dans lequel la plateforme (28) comprend en outre un module d'arrêt d'urgence (58), connecté à un bouton d'arrêt d'urgence (60), et dans lequel le module d'arrêt d'urgence coupe l'alimentation du module d'alimentation (38) lorsque le bouton d'arrêt d'urgence est actionné.

9. Système de démarrage et de protection de moteur (10A ; 10B ; 10C), comprenant :
- un organe de protection (12),
- au moins un organe de commutation (14A ; 14B, 14C ; 14D, 14E, 14F), alimenté par l'organe de protection, chaque organe de commutation comportant un élément de commande (22A ; 22B, 22C ; 22D, 22E, 22F) configuré pour faire basculer l'organe de commutation entre un état fermé dans lequel l'organe de commutation alimente électriquement un moteur électrique, et un état ouvert dans lequel l'organe de commutation n'alimente pas électriquement le moteur électrique, et
- un dispositif de gestion de moteur (16A ; 16B ; 16C), configuré pour fournir une alimentation de commande à l'élément de commande de chaque organe de commutation,
**caractérisé en ce que** le dispositif de gestion de moteur (16A ; 16B ; 16C) est selon l'une quelconque des revendications 1 à 8.

## Patentansprüche

1. **Motormanagementvorrichtung** (16A; 16B; 16C), die konfiguriert ist, um die Stromversorgung eines Elektromotors (18) durch Steuern mindestens eines Schaltorgans (14A; 14B, 14C; 14D, 14E, 14F) zu steuern, indem sie einem Steuerelement (22A; 22B, 22C; 22D, 22E, 22F) von jedem Schaltorgan eine Steuerenergie zuführt, die Motormanagementvorrichtung (16A; 16B; 16C) umfassend:
- eine Plattform (28), die eine elektronische Einheit (32) trägt, die elektronische Einheit umfassend:
∘ ein Energieversorgungsmodul (38), das konfiguriert ist, um einem Steuerelement (22A; 22B, 22C; 22D, 22E, 22F) von jedem Schaltorgan (14A; 14B, 14C; 14D, 14E, 14F) eine Steuerenergie zuzuführen;
∘ ein Überwachungsmodul (42), das konfiguriert ist, um den Strom jeder Phase der Stromversorgung des Elektromotors (18) zu messen und einen Fehler des Elektromotors zu erkennen;
∘ ein Schutzmodul (46), das konfiguriert ist, um die Energieversorgung des Energieversorgungsmoduls (38) zu unterbrechen, wenn das Überwachungsmodul einen elektrischen Fehler des Elektromotors (18) erkennt; und
∘ ein Steuermodul (34), das konfiguriert ist, um das Energieversorgungsmodul (38) basierend auf der Strommessung, die durch das Überwachungsmodul (42) durchgeführt wird, und basierend auf Steuerbefehlen, die von der Motormanagementvorrichtung (16A; 16B; 16C) empfangen werden, zu steuern, und
- einen modularen Verbinder (30), der von der Plattform (28) getrennt ist, umfassend austauschbare Verbindungselemente, diese austauschbaren Verbindungselemente umfassend mindestens die folgenden Verbindungselemente:
∘ mindestens ein Verbindungselement vom Typ Steuerausgang (40), wobei der modulare Verbinder konfiguriert ist, um so viele Verbindungselemente vom Typ Steuerausgang wie die Motormanagementvorrichtung zur Steuerung von Schaltorganen (14A; 14B, 14C; 14D, 14E, 14F) zu umfassen, wobei jedes Verbindungselement vom Typ Steuerausgang konfiguriert ist, um das Steuerelement eines Schaltorgans mit dem Energieversorgungsmodul zu verbinden, und
∘ ein Verbindungselement vom Typ Zustandsausgang (48), das mit dem Überwachungsmodul (42) verbunden und konfiguriert ist, um Fehlerinformationen auszugeben, wenn das Überwachungsmodul einen Fehler des Elektromotors (18) erkennt,
wobei das Steuermodul (34) ferner das Energieversorgungsmodul (38) abhängig von den Verbindungselementen steuert, die der modulare Verbinder (30) umfasst, und wobei der modulare Verbinder (30) mindestens zwei Verbindungselement-Aufnahmestellen (68) umfasst, wobei jede Stelle geeignet ist, um alle Arten von Verbindungselementen (36, 40) aufzunehmen.

2. Motormanagementvorrichtung (16A; 16B; 16C) nach Anspruch 1, wobei die elektronische Einheit (32) ferner ein Identifizierungsmodul (72) umfasst, das mit dem modularen Verbinder (30) verbunden ist, wobei das Identifizierungsmodul automatisch die Anzahl von Verbindungselementen (36, 40), die der modulare Verbinder umfasst, und den Typ jedes Verbindungselements identifiziert, und wobei das Steuermodul (34) das Energieversorgungsmodul (38) abhängig von der Anzahl und dem Typ der Verbindungselemente, die der modulare Verbinder umfasst, steuert.

3. Motormanagementvorrichtung (16A; 16B; 16C) nach Anspruch 2, wobei jedes Verbindungselement (36, 40) des modularen Verbinders (30) elektronische Komponenten zum Verbinden des Verbindungselements mit der elektronischen Einheit (32) der Plattform (28) umfasst und wobei das Identifizierungsmodul (72) automatisch den Typ von jedem Verbindungselement basierend auf den elektronischen Komponenten der Verbindungselemente identifiziert.

4. Motormanagementvorrichtung (16A; 16B; 16C) nach einem der Ansprüche 1 bis 3, wobei die Plattform (28) ferner ein Kommunikationsmodul (54) umfasst, das konfiguriert ist, um Steueranweisungen von einem Industriecomputer zu empfangen und Informationen über den Betrieb der Motormanagementvorrichtung (16A; 16B; 16C) an den Industriecomputer zu übertragen, und wobei das Steuermodul (34) das Energieversorgungsmodul (38) basierend auf den Steueranweisungen steuert, die von dem Kommunikationsmodul empfangen werden.

5. Motormanagementvorrichtung (16A; 16B; 16C) nach einem der Ansprüche 1 bis 4, wobei die Motormanagementvorrichtung (16A; 16B ; 16C) konfiguriert ist, um mit einem Schutzorgan (12) des Elektromotors (18) verbunden zu sein, um über Zustandsinformationen des Schutzorgans zu verfügen, wobei das Steuermodul (34) ferner konfiguriert ist, um das Energieversorgungsmodul (38) basierend auf den Zustandsinformationen des Schutzorgans (12) zu steuern, und wobei der modulare Verbinder (30) ferner ein Verbindungselement vom Zustandseingangstyp (36) umfasst, das konfiguriert ist, um das Schutzorgan mit dem Steuermodul zu verbinden.

6. Motormanagementvorrichtung (16A; 16B; 16C) nach einem der Ansprüche 1 bis 5, wobei der modulare Verbinder (30) ferner ein Verbindungselement vom digitalen Ausgangstyp umfasst, das konfiguriert ist, um das Steuermodul (34) mit einem digitalen Steuerelement eines Schaltorgans zu verbinden, und wobei das Steuermodul konfiguriert ist, um über das Verbindungselement von dem digitalen Ausgangstyp ein digitales Steuersignal an das digitale Steuerelement bereitzustellen.

7. Motormanagementvorrichtung (16A; 16B; 16C) nach einem der Ansprüche 1 bis 6, wobei die Plattform (28) ferner ein Hilfsenergieversorgungsmodul (62) umfasst, das konfiguriert ist, um mit einer Hilfsenergiequelle (64) verbunden zu werden und um die Motormanagementvorrichtung (16A ; 16B; 16C) mit Strom zu versorgen, und wobei vorzugsweise der modulare Verbinder (30) ferner ein Verbindungselement vom Hilfsenergieausgangstyp umfasst, das konfiguriert ist, um das Hilfsenergieversorgungsmodul (62) mit einer externen elektrischen Hilfslast außerhalb der Motormanagementvorrichtung zu verbinden.

8. Motormanagementvorrichtung (16A; 16B; 16C) nach einem der Ansprüche 1 bis 6, wobei die Plattform (28) ferner ein Not-Aus-Modul (58) umfasst, das mit einem Not-Aus-Knopf (60) verbunden ist, und wobei das Not-Aus-Modul die Energieversorgung des Energieversorgungsmoduls (38) unterbricht, wenn der Not-Aus-Knopf betätigt wird.

9. System zum Starten und Schützen eines Motors (10A; 10B; 10C), umfassend:
- ein Schutzorgan (12),
- mindestens ein Schaltorgan (14A; 14B, 14C; 14D, 14E, 14F), das von dem Schutzorgan versorgt wird, wobei jedes Schaltorgan ein Steuerelement (22A; 22B, 22C; 22D, 22E, 22F) aufweist, das konfiguriert ist, um das Schaltorgan zwischen einem geschlossenen Zustand, in dem das Schaltorgan einen Elektromotor elektrisch versorgt, und einem offenen Zustand, in dem das Schaltorgan den Elektromotor nicht elektrisch versorgt, umzuschalten; und
- eine Motormanagementvorrichtung (16A; 16B; 16C), die konfiguriert ist, um dem Steuerelement von jedem Schaltorgans eine Steuerenergie zuzuführen,
**dadurch gekennzeichnet, dass** die Motormanagementvorrichtung (16A; 16B; 16C) gemäß einem der Ansprüche 1 bis 8 ist.

## Claims

1. **A motor** management device (16A; 16B; 16C), configured to control the power supply to an electric motor (18) by driving at least one switching member (14A; 14B, 14C; 14D, 14E, 14F), by supplying drive power to a drive element (22A; 22B, 22C; 22D, 22E, 22F) of each switching member, the motor management device (16A; 16B; 16C) comprising:
- a platform (28), carrying an electronic unit (32), the electronic unit comprising:
∘ a power supply module (38), configured to supply drive power to a drive element (22A; 22B, 22C; 22D, 22E, 22F) of each switching member (14A; 14B, 14C; 14D, 14E, 14F);
∘ a monitoring module (42), configured to measure the current of each phase of the power supply to the electric motor (18) and to detect a fault in the electric motor;
∘ a protection module (46), configured to cut power to the power supply module (38) when the monitoring module detects an electrical fault in the electric motor (18); and
∘ a control module (34), configured to drive the power supply module (38) on the basis of the current measurement made by the monitoring module (42) and on the basis of drive instructions received by the motor management device (16A; 16B; 16C), and
- a modular connector (30), separate from the platform (28), comprising interchangeable connection elements, these interchangeable connection elements comprising at least the following connection elements:
∘ at least one connection element of the control output type (40), the modular connector being configured to comprise as many connection elements of the control output type as there are switching members (14A; 14B, 14C; 14D, 14E, 14F) that the motor management device drives, each control output type connection element being configured to connect the drive element of a switching member to the power supply module, and
∘ a connection element of the status output type (48), connected to the monitoring module (42) and configured to supply fault information when the monitoring module detects a fault in the electric motor (18),
wherein the control module (34) furthermore drives the power supply module (38) as a function of the connection elements which the modular connector (30) comprises, and wherein the modular connector (30) comprises at least two connection element receiving locations (68), each location being capable of receiving all types of connection elements (36, 40).

2. The motor management device (16A; 16B; 16C) according to claim 1, wherein the electronic unit (32) further comprises an identification module (72), connected to the modular connector (30), the identification module automatically identifying the number of connection elements (36, 40) that the modular connector comprises and the type of each connection element, and wherein the control module (34) drives the power supply module (38) as a function of the number and type of connection elements that the modular connector comprises.

3. The motor management device (16A; 16B; 16C) according to claim 2, wherein each connection element (36, 40) of the modular connector (30) comprises electronic components for connecting the connection element to the electronic unit (32) of the platform (28) and wherein the identification module (72) automatically identifies the type of each connection element on the basis of the electronic components of the connection elements.

4. The motor management device (16A; 16B; 16C) according to any one of claims 1 to 3, wherein the platform (28) further comprises a communication module (54), configured to receive drive instructions from an industrial computer, and to transmit operating information of the motor management device (16A; 16B; 16C) to the industrial computer, and wherein the control module (34) drives the power supply module (38) on the basis of the drive instructions received by the communication module.

5. The motor management device (16A; 16B; 16C) according to any one of claims 1 to 4, wherein the motor management device (16A; 16B; 16C) is configured to be connected to a protection member (12) of the electric motor (18) so as to have status information of the protection member, wherein the control module (34) is further configured to drive the power supply module (38) on the basis of the status information of the protection member (12), and wherein the modular connector (30) further comprises a connection element of the status input type (36) configured to connect the protection member to the control module.

6. The motor management device (16A; 16B; 16C) according to any one of claims 1 to 5, wherein the modular connector (30) further comprises a connection element of the digital output type configured to connect the control module (34) to a digital drive element of a switching member, and wherein the control module is configured to supply a digital drive signal to the digital drive element via the connection element of the digital output type.

7. The motor management device (16A; 16B; 16C) according to any one of claims 1 to 6, wherein the platform (28) further comprises an auxiliary power supply module (62) configured to be connected to an auxiliary power source (64) and to supply auxiliary power to the motor management device (16A; 16B; 16C), and wherein, preferably, the modular connector (30) further comprises an auxiliary power output type connection element configured to connect the auxiliary power supply module (62) to an auxiliary electrical load external to the motor management device.

8. The motor management device (16A; 16B; 16C) according to any one of claims 1 to 6, wherein the platform (28) further comprises an emergency stop module (58), connected to an emergency stop button (60), and wherein the emergency stop module cuts off power to the power supply module (38) when the emergency stop button is operated.

9. A motor starting and protection system (10A; 10B; 10C), comprising:
- a protection member (12),
- at least one switching member (14A; 14B, 14C; 14D, 14E, 14F), supplied with power by the protection member, each switching member comprising a drive element (22A; 22B, 22C; 22D, 22E, 22F) configured to switch the switching member between a closed state wherein the switching member electrically supplies an electric motor, and an open state wherein the switching member does not electrically supply the electric motor, and
- a motor management device (16A; 16B; 16C), configured to supply drive power to the drive element of each switching member,
**characterised in that** the motor management device (16A; 16B; 16C) is according to any one of claims 1 to 8.
